# EUROPÄISCHE PATENTSCHRIFT

(11) **EP 1 817 214 B1**
(45) Veröffentlichungstag und Bekanntmachung des Hinweises auf die Patenterteilung: **11.11.2015**
(21) Anmeldenummer: 04798025.5
(22) Anmeldetag: 20.11.2004
(51) Int. Cl.: B60S 13/00, B66F 7/24

(54) **AUFNAHMEVORRICHTUNG FÜR EIN FAHRZEUG**
HOLDING DEVICE FOR A VEHICLE
DISPOSITIF DE RECEPTION POUR UN VEHICULE

(43) Veröffentlichungstag der Anmeldung: 15.08.2007
(73) Patentinhaber: Otto Wöhr GmbH, 70825 Korntal-Münchingen (DE)
(72) Erfinder: ZANGERLE, Andreas, 71272 Renningen (DE); EHLEITER, Karoline, 71032 Böblingen (DE); MAUCH, Michael, 71299 Wimsheim (DE); NIEPELT, Jens, 71083 Herrenberg (DE); LEUTENMAYR, Robert, 71106 Magstadt (DE)
(74) Vertreter: Hoeger, Stellrecht & Partner Patentanwälte mbB
(86) Internationale Anmeldenummer: PCT/EP2004/013204
(87) Internationale Veröffentlichungsnummer: WO 2006/053583

(56) Entgegenhaltungen:
- DE-A1- 3 607 910
- DE-A1- 4 339 590
- DE-A1- 10 048 754
- DE-U1- 20 215 965

## Beschreibung

Die Erfindung betrifft eine Aufnahmevorrichtung für ein mit Rädern auf einer Tragfläche stehendes Fahrzeug, mit einer in Fahrtrichtung des Fahrzeugs verschiebbaren Tragvorrichtung, mit mindestens einer parallel zur Fahrtrichtung des Fahrzeuges verlaufenden Verschiebebahn für die Räder des Fahrzeugs, die zumindest an einem Ende der Verschiebebahn nur so hoch über der Tragfläche angeordnet ist, dass sie unterhalb der Achse der Räder des Fahrzeugs liegt, und mit einem hinter ein Rad einschiebbaren, an der Rückseite des Rades anlegbaren Mitnehmer für das Rad, der an der Tragvorrichtung längs der Verschiebebahn verschiebbar gelagert ist, mit einem Antrieb zur Verschiebung der Tragvorrichtung in Fahrtrichtung des Fahrzeugs und mit einem Antrieb zur Verschiebung des Mitnehmers längs der Verschiebbebahn.

Eine derartige Aufnahmevorrichtung ist beispielsweise aus der DE 102 53 847 A1 bekannt. Mit einer solchen Aufnahmevorrichtung ist es möglich, unter ein auf einer Tragfläche stehendes Fahrzeug in Fahrtrichtung eine Aufnahmevorrichtung einzuschieben, so dass das Fahrzeug nach dem Einschiebevorgang auf der Verschiebebahn der Tragvorrichtung steht und mittels der Aufnahmevorrichtung transportiert werden kann. Das Fahrzeug wird dabei einfach auf der Tragfläche abgestellt und kann auf diese Weise von der Aufnahmevorrichtung aufgenommen werden.

Allerdings können sich Schwierigkeiten dann ergeben, wenn das Fahrzeug auf der Tragfläche nicht ausreichend gegen ein Wegrollen gesichert ist, beispielsweise dann, wenn weder die Handbremse angezogen noch ein Gang eingelegt ist. Dann besteht nämlich die Gefahr, dass die Aufnahmevorrichtung beim Vorschieben gegen das Fahrzeug dieses verschiebt und nicht in der gewünschten Weise die an der Verschiebebahn anliegenden Räder auf diese aufsetzen kann. In der DE 100 48 754 A1 ist eine gattungsgemässe Vorrichtung zum teilweisen Anheben eines Fahrzeuges beschrieben, bei dem dieser Transportwagen unter ein Fahrzeug geschoben werden kann, bis als Rollen ausgebildete Träger an den Rädern auf gegenüberliegenden Seiten des Fahrzeuges anstoßen. Auf der Rückseite der Räder können schwenkbare Mittel an die beiden Räder angelegt werden, und diese schwenkbaren Mittel können dann an die Träger angenähert werden, so dass dadurch die Räder des Fahrzeuges vom Boden abgehoben werden. Auf diese Weise lassen sich entweder die Vorderräder oder die Hinterräder des Fahrzeuges durch den Transportwagen anheben, und bei Verfahren des Transportwagens kann dann das Fahrzeug auf den beiden anderen, auf dem Boden verbleibenden Rädern verfahren werden. Eine vollständige Aufnahme des Fahrzeuges auf dem Transportwagen ist dabei nicht möglich.

Eine solche vollständige Aufnahme eines Fahrzeuges auf beweglichen Verschiebebahnen wird bei einer Aufnahmeeinrichtung für ein Fahrzeug möglich, wie es in der DE 202 15 965 U1 beschrieben ist. Dabei können quer zur Fahrtrichtung des aufzunehmenden Fahrzeuges zwei paarweise nebeneinanderliegende Verschiebebahnen auf gegenüberliegenden Seiten der Räder eines Fahrzeuges unter das Fahrzeug geschoben werden. Durch eine schräge Anordnung der Verschiebebahnen legen sich diese beim Einfahren der Aufnahmeeinrichtung unter das Fahrzeug an die Vorder- und Rückseite der Räder an und heben diese schließlich vom Boden ab. Dabei werden die Förderbahnen gegenüber der Aufnahmeeinrichtung mit derselben Geschwindigkeit verschoben, mit der die Aufnahmeeinrichtung auf dem Boden verfahren wird, allerdings ist die Geschwindigkeit der Förderbahnen der Geschwindigkeit der Aufnahmeeinrichtung entgegengesetzt, so dass der an den jeweiligen Rädern anliegende Teil der Förderbahnen beim Einschieben der Aufnahmeeinrichtung unter das Fahrzeug ortsfest am Rad verbleibt. Auf diese Weise kann die Aufnahmeeinrichtung vollständig unter das Fahrzeug geschoben werden, dessen auf gegenüberliegenden Seiten angeordnete Räder dann auf den paarweise angeordneten Verschiebebahnen aufgenommen werden.

Um das Fahrzeug vollständig vom Boden aufnehmen zu können, sind zwei derartige Aufnahmeeinrichtungen notwendig, nämlich eine Aufnahmeeinrichtung für die Vorderräder und eine Aufnahmeeinrichtung für die Hinterräder des Fahrzeuges.

Es ist Aufgabe der Erfindung, eine gattungsgemäße Aufnahmevorrichtung so zu verbessern, dass eine vollständige Aufnahme des Fahrzeuges auf der Aufnahmevorrichtung durch Einschieben der Aufnahmevorrichtung in Fahrtrichtung des Fahrzeuges möglich wird.

Diese Aufgabe wird erfindungsgemäß durch eine Aufnahmevorrichtung der eingangs beschriebenen Art gelöst, die gekennzeichnet ist durch eine Steuerung für diese Antriebe, die zur Aufnahme eines Rades auf einer Verschiebebahn sowohl den Mitnehmer an der Rückseite des Rades als auch das dem Rad zugewandte Ende der Verschiebebahn an der Vorderseite des Rades an dieses anlegt und nach dem Anlegen des Mitnehmers und der Verschiebebahn an das Rad die Tragvorrichtung in Richtung auf das Rad auf der Tragfläche vorschiebt und dabei den Mitnehmer in Richtung auf die Verschiebebahn relativ zu dieser mit derselben Geschwindigkeit vorschiebt, mit der sie die Tragvorrichtung gegenüber der Tragfläche verschiebt, mit Ausnahme einer kurzen Periode nach Anlage von Mitnehmer und Verschiebebahn am Rad, in der die Steuerung zum Anheben des Rades kurzzeitig den Mitnehmer in Richtung auf die Verschiebebahn relativ zu dieser mit einer Geschwindigkeit verschiebt, die höher ist als die Vorschubgeschwindigkeit der Tragvorrichtung relativ zur Tragfläche, so dass während der kurzen Periode der Mitnehmer von der einen Seite des Rades und die Verschiebebahn von der anderen Seite des Rades in Richtung auf die Radmitte verschoben werden.

Es werden also zunächst an das Rad von der Rückseite her der Mitnehmer und von der Vorderseite her die Verschiebebahn angelegt, so dass das Rad zwischen diesen beiden Elementen gehalten wird. Erst wenn diese Anlage von beiden Seiten erfolgt ist, wird die Tragvorrichtung in Richtung auf den Mitnehmer verschoben, der dann seinerseits derart gegen die Verschiebebahn verschoben wird, dass die Tragvorrichtung unter das Rad gelangen kann, dabei wird das Rad durch den Mitnehmer am Wegrollen gehindert, auch wenn es nicht gesichert ist.

Durch die kurzzeitige Erhöhung der Vorschubgeschwindigkeit des Mitnehmers in Richtung auf die Tragvorrichtung werden beide Anlageelemente am Rad, also einerseits der Mitnehmer und andererseits das Ende der Verschiebebahn, von beiden Seiten her gegen die Mitte des Rades verschoben und wandern am Radumfang in Richtung auf den tiefsten Punkt, dies führt zu einem Anheben des Rades, so dass das Aufsetzen des Rades auf die Verschiebebahn erleichtert wird.

Es ist dabei weiterhin vorgesehen, dass die Steuerung die erhöhte Verschiebegeschwindigkeit des Mitnehmers wieder auf eine Geschwindigkeit reduziert, die im wesentlichen gleich der Vorschubgeschwindigkeit der Tragvorrichtung ist, bevor der Mitnehmer das Ende der Verschiebebahn erreicht. Die beiden Anlageelemente Mitnehmer und Verschiebebahn wandern also nur über einen Teil des Umfanges des Rades zur Mitte des Rades hin, jedoch nicht ganz bis zur Mitte des Rades. Ab diesem Zeitpunkt bewegt sich der Mitnehmer in Richtung auf die Verschiebebahn nur noch mit einer Geschwindigkeit die im wesentlichen gleich groß ist wie die Geschwindigkeit der Tragvorrichtung relativ zur Tragfläche, das heißt ab diesem Zeitpunkt bleibt der Mitnehmer gegenüber der Tragfläche wieder ortsfest und stützt das Rad bei der weiteren Bewegung der Tragvorrichtung ab.

Es kann vorgesehen sein, dass die Steuerung den Mitnehmer nach der Anlage von Mitnehmer und Verschiebebahn am Rad kurzzeitig mit einer Geschwindigkeit gegen die Verschiebebahn verschiebt, die im wesentlichen doppelt so groß ist wie die Vorschubgeschwindigkeit der Tragvorrichtung relativ zur Tragfläche.

Es ist vorteilhaft, wenn der Mitnehmer mit einer Rolle an das Rad anlegbar ist, die um eine parallel zur Drehachse des Rades verlaufende Achse frei drehbar ist. In dem Bewegungsbereich, in dem der Mitnehmer kurzzeitig schneller bewegt ist und dadurch am Umfang des Rades zu einer tiefer gelegenen Stelle gelangt, rollt der Mitnehmer somit am Umfang des Rades ab, so dass das Rad des Fahrzeuges bei dieser Bewegung unverdreht bleibt. Dieser Aufnahmevorgang ist somit ohne weiteres auch mit einem blockierten Rad durchführbar.

Der Mitnehmer kommt unterhalb der halben Höhe des Rades an diesem zur Anlage.

Das Aufsetzen des Rades auf die Verschiebeeinrichtung kann zusätzlich dadurch erleichtert werden, dass eine den Mitnehmer vor dem Erreichen der Verschiebebahn anhebende Hubeinrichtung vorgesehen ist. Das Anheben des Mitnehmers führt auch zu einem Anheben des darauf ruhenden Rades, das damit die Stufe zur Verschiebebahn leichter überwinden kann.

Die Hubeinrichtung kann insbesondere eine den Mitnehmer bei seiner Verschiebung gegen die Verschiebebahn anhebende Zwangsführung sein, beispielsweise mindestens eine in Richtung auf die Verschiebebahn keilförmig ansteigende Stützfläche an der Tragvorrichtung, auf der sich der Mitnehmer abstützt.

Bei einer besonders bevorzugten Ausführungsform wird die Verschiebebahn gebildet durch ein Förderband oder durch eine Rollenbahn.

Förderband und Rollenbahn können frei umlaufend sein, es ist aber insbesondere bei einer bevorzugten Ausführungsform vorgesehen, daß die Verschiebebahn angetrieben ist und mit einer Geschwindigkeit umläuft, die der Vorschubgeschwindigkeit der Tragvorrichtung gleich aber entgegengesetzt ist. Damit bleibt die Verschiebebahn, die durch das obere Trum des Förderbandes oder die Oberseite der Rollenbahn gebildet wird, gegenüber der Tragfläche ortsfest, eine Relativbewegung des Fahrzeugs gegenüber dem oberen Trum des Förderbandes oder der Oberseite der Rollenbahn tritt also nicht ein.

Gemäß einer weiteren bevorzugten Ausführungsform ist vorgesehen, daß die Steuerung zunächst die Tragvorrichtung so weit gegen das Rad vorschiebt, bis sich das Ende der Verschiebebahn kurz vor dem Rad befindet, dann die Vorschubbewegung der Tragvorrichtung reduziert oder abbricht, darauf den Mitnehmer an die Rückseite des Rades anlegt und danach die Vorschubbewegung der Tragvorrichtung in Richtung auf das Rad fortsetzt. Auf diese Weise ist sichergestellt, daß in jedem Fall der Mitnehmer an dem Rad anliegt, wenn die Tragvorrichtung das Rad erreicht. Eine ungewollte Verschiebung des Rades durch die Tragvorrichtung wird somit ausgeschlossen.

Zu diesem Zweck kann an der Tragvorrichtung ein Sensor vorgesehen sein, der in Abhängigkeit vom Abstand des Endes der Verschiebebahn von dem Rad Steuersignale an die Steuerung sendet. Insbesondere kann der Sensor eine Lichtschranke umfassen. Es sind grundsätzlich auch andere Sensoren denkbar, beispielsweise Tastelemente, die bei Anlage am Rad Steuersignale erzeugen, oder Strommeßeinrichtungen, die den für die Betätigung des Antriebs der Tragvorrichtung notwendigen Strom messen und bei Übersteigen eines Maximalwertes dieses Stromes ein Steuersignal erzeugen. Wenn die Tragvorrichtung am Rad anliegt und an einer weiteren Verschiebung gehindert wird, steigt der Antriebsstrom an, und dieser Anstieg wird zur Erzeugung des Steuersignals verwendet, die Strommeßeinrichtung wirkt somit als Berührungssensor.

Der Sensor kann auch mehrere Sensorelemente umfassen, beispielsweise mehrere hintereinander geschaltete Lichtschranken, die Steuersignale bei unterschiedlichem Abstand der Tragvorrichtung am Rad erzeugen. So kann beispielsweise ein vorauseilender Sensor verwendet werden, um die Geschwindigkeit der Tragvorrichtung, mit der diese auf das Rad zu geschoben wird, beim Annähern der Verschiebebahn an das Rad zu reduzieren, eine nacheilende Lichtschranke kann dann das Erreichen des Rades selbst feststellen und gegebenenfalls die Vorschubbewegung der Tragvorrichtung unterbrechen oder im Gegenteil die Aufnahmebewegung des Mitnehmers und der Tragvorrichtung einleiten.

Es ist weiterhin günstig, wenn am Mitnehmer ein Sensor vorgesehen ist, der in Abhängigkeit von der Anlage des Mitnehmers am Rad Steuersignale an die Steuerung sendet. Der Sensor kann ein Tastelement sein.

Während es grundsätzlich möglich ist, an der Tragvorrichtung nur einen Mitnehmer vorzusehen, der sich an ein Rad anlegt, kann es günstig sein, wenn nebeneinander zwei Mitnehmer an der Tragvorrichtung vorgesehen sind, die jeweils an einem von zwei nebeneinanderliegenden Rädern eines Fahrzeugs anlegbar sind. Es ist auf diese Weise beispielsweise möglich, das linke und das rechte Rad eines Fahrzeugs gleichzeitig mit entsprechenden Mitnehmern zu sichern und dann auf entsprechende nebeneinanderliegende Verschiebebahnen der Tragvorrichtung aufzusetzen.

Günstig ist es, wenn der Mitnehmer einen aus einer im wesentlichen parallel zur Fahrtrichtung des Fahrzeuges verlaufenden Ruhestellung in eine quer dazu stehende Anlagestellung verschwenkbaren Arm umfaßt.

Bei einer bevorzugten Ausführungsform sind zwei Mitnehmer an einem zwischen zwei parallelen Verschiebebahnen angeordneten, parallel zu den Verschiebebahnen verschiebbaren Schlitten gelagert. Die Mitnehmer werden dann im wesentlichen längs der Mittellinie eines Fahrzeugs zwischen den auf gegenüberliegenden Seiten des Fahrzeuges angeordneten Rädern vorgeschoben und in die Anlagestellung nach beiden Seiten ausgefahren.

Es ist vorteilhaft, wenn gegenüberliegenden Enden der Verschiebebahn je ein Mitnehmer zugeordnet ist. Bei einer derartigen Ausgestaltung einer Aufnahmevorrichtung kann ein Fahrzeug von beiden Seiten der Aufnahmevorrichtung auf dieses aufgesetzt beziehungsweise nach beiden Seiten abgesetzt werden.

Günstig ist es, wenn zwei im wesentlichen gleich aufgebaute Tragvorrichtungen mit ihren den Mitnehmern abgewandten Enden aneinanderliegend zusammengekuppelt sind. Man erhält dann einen im wesentlichen symmetrischen Aufbau mit der Möglichkeit, das Fahrzeug nach beiden Seiten abzusetzen und von beiden Seiten aufzunehmen.

Besonders vorteilhaft ist es bei einer derartig gekuppelten Anordnung, wenn beide Tragvorrichtungen selbständig verfahrbar und um eine quer zur Verschieberichtung verlaufende, horizontale Schwenkachse gegeneinander verschwenkbar sind. Auf diese Weise ruht jede der beiden Tragvorrichtungen über Tragräder oder andere Tragelemente auf der Tragfläche auf, Unebenheiten der Tragfläche können dadurch optimal ausgeglichen werden, indem sich die beiden Tragvorrichtungen gegeneinander verschwenken.

Der Mitnehmer kann prinzipiell dazu verwendet werden, beim Aufsetzen des der Verschiebebahn nächststehenden Rades mitzuwirken. Besonders vorteilhaft ist es aber, wenn die Steuerung nach dem Aufsetzen eines Rades auf die Verschiebebahn den Mitnehmer von dem Rad entfernt und so weit in Verschieberichtung der Tragvorrichtung verschiebt, daß der Mitnehmer das in Fahrtrichtung der Fahrzeuges nächste Rad desselben hintergreifen und dann an dessen Rückseite zur Anlage gebracht werden kann. Auf diese Weise kann der gleiche Aufsetzvorgang mit demselben Mitnehmer sowohl für das Vorderrad als auch für das Hinterrad eines Fahrzeuges eingesetzt werden.

Es kann vorgesehen sein, daß die Steuerung den Mitnehmer an einem Rad anliegend längs der Verschiebebahn verschiebt, bis das Fahrzeug vollständig auf der Tragvorrichtung steht. Der an dem Rad anliegende Mitnehmer wirkt dann als Anschlag, der das Fahrzeug auf der Tragvorrichtung sichert.

Bei einer bevorzugten Ausführungsform kann vorgesehen sein, daß zwei nebeneinander angeordnete Verschiebebahnen in Verschieberichtung gegeneinander versetzt sind, so daß nebeneinander angeordnete Räder nicht gleichzeitig auf die Verschiebebahnen aufgesetzt werden, sondern zeitlich nacheinander.

Die nachfolgende Beschreibung bevorzugter Ausführungsformen dient im Zusammenhang mit der Zeichnung der näheren Erläuterung. Es zeigen:
- Figur 1:: eine perspektivische Ansicht einer Aufnahmevorrichtung mit zwei schwenkbar miteinander gekuppelten Tragvorrichtungen mit eingefahrenen Mitnehmern;
- Figur 2:: eine perspektivische Ansicht einer der beiden Tragvorrichtungen mit ausgefahrenen und in Ruhestellung geschwenkten Mitnehmern;

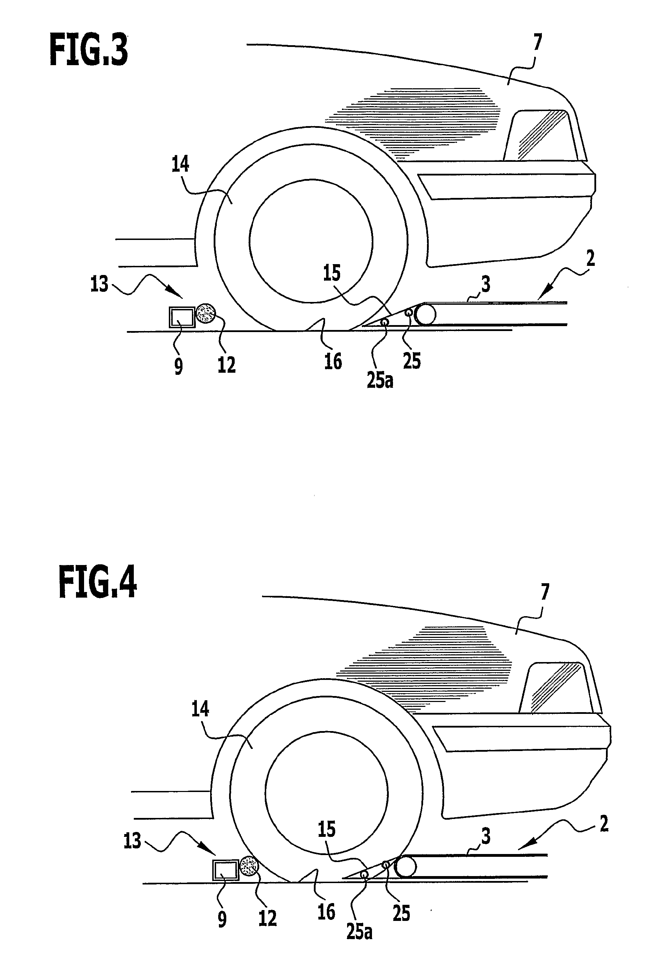

- Figur 3:: eine schematische Seitenansicht eines Mitnehmers und einer Verschiebebahn beim Beginn des Aufnahmevorgangs eines Rades;
- Figur 4:: eine Ansicht ähnlich Figur 3 mit dem Mitnehmer und der Verschiebebahn in Anlage an dem Rad;
- Figur 5:: eine Ansicht ähnlich Figur 4 mit einem an die Verschiebebahn angenäherten Mitnehmer und einem angehobenen Rad;
- Figur 6:: eine Ansicht ähnlich Figur 5 mit einem auf die Verschiebebahn aufgesetzten Rad;
- Figur 7:: eine Teildraufsicht auf die Tragvorrichtung der Figuren 1 und 2 mit einem Mitnehmer in Ruhestellung (gepunktet) und in Anlagestellung (ausgezogen) vor dem Aufsetzen des Vorderrades eines Fahrzeuges auf die Verschiebebahn und

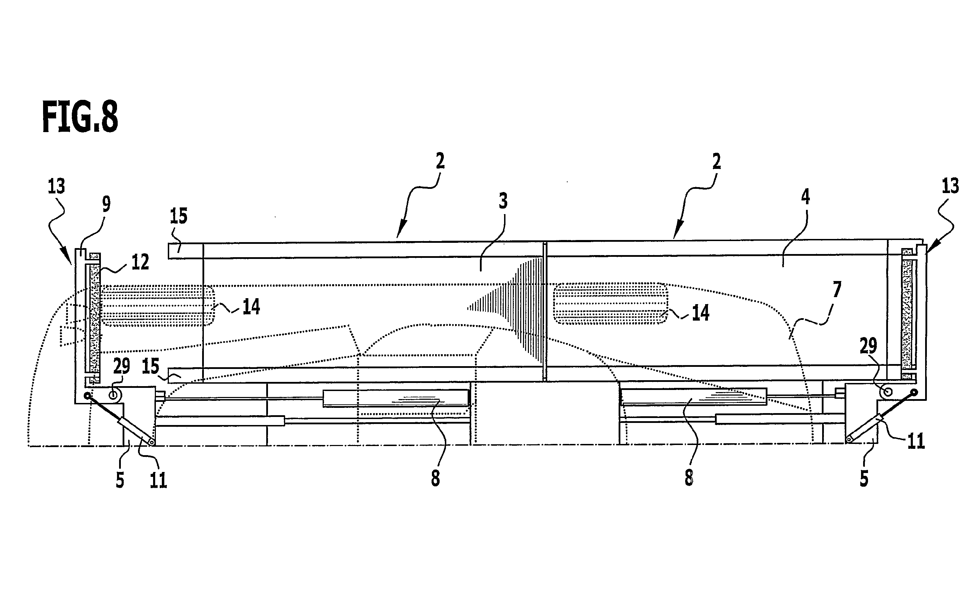

- Figur 8:: eine Ansicht ähnlich Figur 7 beim Aufsetzen des Hinterrades auf die Verschiebebahn.

Die in der Zeichnung dargestellte Aufnahmevorrichtung 1 umfaßt zwei gleich aufgebaute Tragvorrichtungen 2, die im wesentlichen zwei parallel und im Abstand nebeneinanderliegende Verschiebebahnen 3, 4 und einen dazwischen angeordneten, längs der Verschiebebahnen 3, 4 verschiebbaren Schlitten 5 umfassen. Jede Tragvorrichtung 2 ist auf Rollen 6 längs der Verschiebebahnen 3, 4 verfahrbar, und die beiden gleich aufgebauten Tragvorrichtungen 2 sind so zusammengekuppelt, daß die Verschiebebahnen beider Tragvorrichtungen 2 zueinander ausgerichtet sind. Im Kupplungsbereich sind die beiden Tragvorrichtungen 2 um eine quer zur Längsrichtung der Verschiebebahnen und horizontal verlaufende Schwenkachse gelenkig miteinander verbunden, so daß die beiden Tragvorrichtungen 2 als selbständig verfahrbare Einheiten gegeneinander verschwenken können, wenn die Aufnahmevorrichtung 1 auf einer unebenen Fläche verfahren wird.

In dem dargestellten Ausführungsbeispiel wird jede Verschiebebahn 3, 4 gebildet von einem umlaufenden Förderband, welches in Längsrichtung der Verschiebebahnen umläuft und das obere Trum dieser Förderbänder bildet eine Auflagefläche für ein auf der Aufnahmevorrichtung 1 aufnehmbares Fahrzeug 7. Das Förderband ist dazu in geeigneter, aus der Zeichnung nicht ersichtlicher Weise unterstützt. Die gesamte Tragvorrichtung 2 weist vorzugsweise eine sehr geringe Bauhöhe auf, dies läßt sich einmal durch die Verwendung von Rollen 6 mit sehr kleinem Durchmesser realisieren, zum anderen dadurch, daß das Förderband an seinen Enden Umlenkrollen mit sehr geringem Durchmesser aufweist, so daß das obere und das untere Trum dicht aneinanderliegend in Gegenrichtung umlaufend geführt sind.

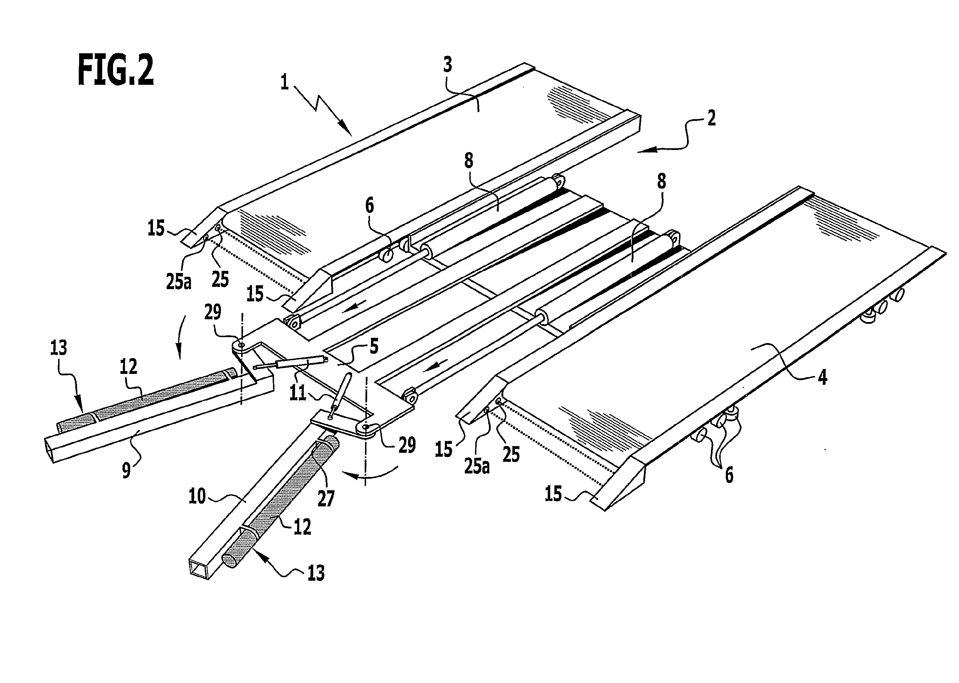

Der Schlitten 5 der Aufnahmevorrichtung 1 kann über geeignete Antriebselemente, im dargestellten Ausführungsbeispiel über pneumatisch oder hydraulisch betätigte Kolben-Zylinder-Aggregate 8, parallel zu den Verschiebebahnen 3, 4 verschoben werden, so daß der Schlitten 5 nach einer Seite von der entsprechenden Tragvorrichtung im Abstand angeordnet ist, wie dies in Figur 2 deutlich wird.

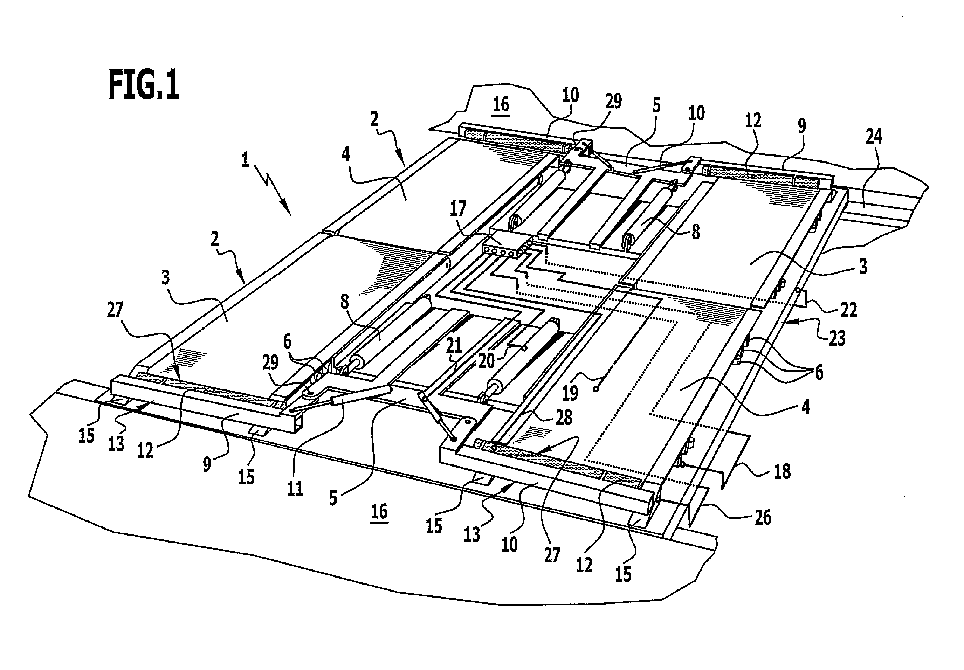

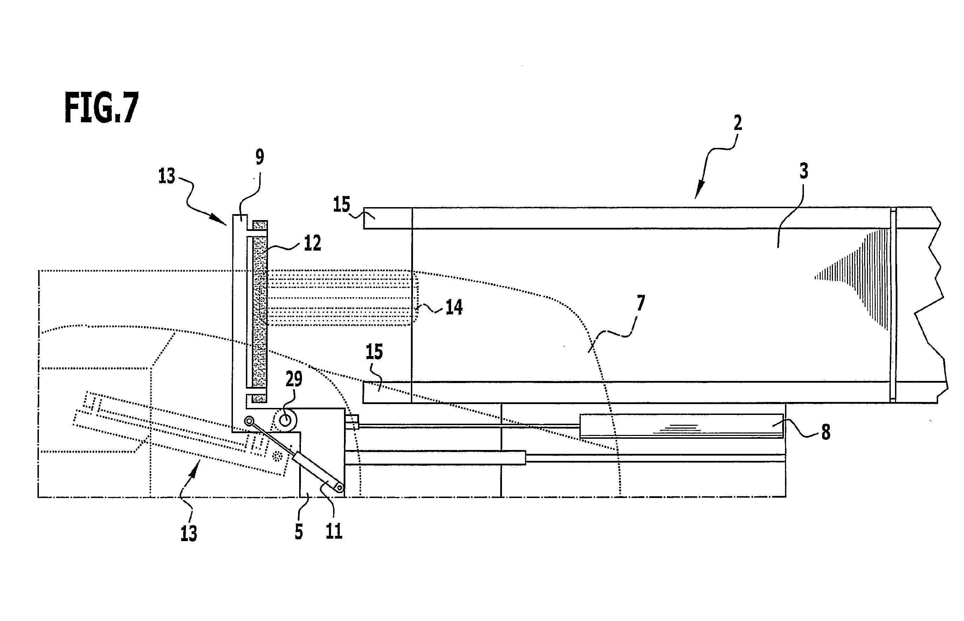

An dem Schlitten 5 sind um senkrechte Achsen verschwenkbar zwei Arme 9, 10 gelagert, die gleich und spiegelbildlich zueinander ausgebildet sind. Die Arme 9, 10 können über einen geeigneten Antrieb, der im dargestellten Ausführungsbeispiel wiederum als Kolben-Zylinder-Aggregat 11 ausgebildet ist, aus einer Ruhestellung, in der die Arme 9, 10 im wesentlichen parallel zur Verschiebebahn 3 stehen (Figur 2) in eine Anlagestellung ausgeschwenkt werden, in der sie quer zur Längsrichtung der Verschiebebahn 3 stehen (Figur 1). In Figur 7 sind die Arme 9, 10 in der Ruhestellung in gepunkteten Linien, in der Anlagestellung in ausgezogenen Linien gezeigt.

An den Armen 9, 10 sind parallel zu diesen verlaufend Anlagerollen frei drehbar gelagert, die in der Anlagestellung der Arme dem Ende der Verschiebebahnen 3, 4 zugewandt sind und parallel zu den Umlenkrollen der diese Verschiebebahnen 3, 4 ausbildenden Förderbänder verlaufen.

Jeweils ein Arm 9, 10 mit der daran drehbar gelagerten Anlagerolle 12 bildet einen Mitnehmer 13 aus, der in der weiter unten beschriebenen Weise am Rad 14 eines Fahrzeuges 7 anlegbar ist.

Beide Verschiebebahnen 3, 4 weisen an ihrem dem Mitnehmer 13 zugewandten Ende seitlich zwei keilförmig ansteigende Rampen 15 auf, die im wesentlichen von einer Tragfläche 16, auf der die Aufnahmevorrichtung 1 verfährt und auf der auch das Fahrzeug 7 steht, zur angrenzenden Verschiebebahn 3, 4 ansteigen. Auf diese Rampen 15 setzt sich die Anlagerolle 12 eines Mitnehmers 13 auf, wenn dieser an die entsprechende Verschiebebahn 3, 4 herangefahren wird, dadurch wird der Mitnehmer 13 beim weiteren Heranfahren geringfügig angehoben.

In Figur 1 ist schematisch eine Steuerung 17 dargestellt, die entweder ortsfest angeordnet und dann mit Kabeln mit der Aufnahmevorrichtung 1 verbunden ist, die aber auch an der Aufnahmevorrichtung 1 selbst mitgeführt werden kann.

Diese Steuerung ist über geeignete Steuerleitungen mit Sensoren und Antrieben an der Aufnahmevorrichtung 1 verbunden, dies ist in der Zeichnung schematisch durch die zu den jeweiligen Bauteilen führenden Verbindungslinien dargestellt. Eine Steuerleitung 18 ist mit einem Antrieb der Tragvorrichtung 2 verbunden, dieser Antrieb kann über die Rollen 6 die Aufnahmevorrichtung 1 parallel zur Längsrichtung der Verschiebebahn 3, 4 auf der Tragfläche verfahren. Eine Steuerleitung 19 ist mit dem Antrieb der Förderbänder verbunden und über diese Leitung wird die Umlaufbewegung der Förderbänder gesteuert.

Weitere Steuerleitungen 20 beziehungsweise 21 führen zu den Kolben-Zylinder-Aggregaten 8 des Schlittens 5 und 11 der Mitnehmer 13. Schließlich ist eine weitere Steuerleitung 22 vorgesehen, durch die die Bewegung einer Platte 23 gesteuert wird, die längs einer quer zur Längsrichtung der Verschiebebahnen 3, 4 verlaufenden Führung 24 verschiebbar ist und auf der die Aufnahmevorrichtung 1 verfahrbar ist. Die Platte 23 ist Teil der Tragfläche 16, die sich zu beiden Seiten auf gleichem Niveau an die Oberseite der Platte 23 anschließt. Die Platte 23 mit der darauf angeordneten Aufnahmevorrichtung 1 kann somit an verschiedene Stellplätze auf der Tragfläche verfahren werden.

Am Ende der Verschiebebahnen 3, 4 ist zwischen den Rampen 15 eine quer zur Längsrichtung der Verschiebebahnen 3, 4 verlaufende Lichtschranke 25 angeordnet, diese ist über eine Signalleitung 26 mit der Steuerung 17 verbunden. Die Anlagerolle 12 eines Mitnehmers 13 bildet gleichzeitig einen Drucksensor 27 aus, wenn die Anlagerolle 12 gegen den entsprechenden Arm 9, 10 gedrückt wird, erzeugt dieser Drucksensor 27 ein Signal, das über eine Signalleitung 28 der Steuerung 17 zugeführt wird.

Beim Betrieb der Aufnahmevorrichtung 1 wird diese zunächst mit Hilfe der Platte 23 vor ein auf der Tragfläche 16 stehendes Fahrzeug 7 gefahren, so daß die Verschiebebahnen 3 und 4 mit den Rädern 14 des Fahrzeugs 7 ausgerichtet sind. Die Mitnehmer 13 werden von der Steuerung 17 in ihre Ruhelage verschwenkt, also in die eingeschwenkte Stellung, in der sie im wesentlichen parallel zu den Verschiebebahnen 3 und 4 verlaufen und zwischen diesen angeordnet sind. Anschließend wird die Aufnahmevorrichtung 1 in Richtung auf das Fahrzeug 7 verschoben, bis die Verschiebebahnen 3, 4 so dicht an die Räder 14 des Fahrzeugs 7 angenähert sind, daß die Lichtschranke 25 anspricht. Sobald dies der Fall ist, wird die Vorschubbewegung der Aufnahmevorrichtung 1 in Richtung auf das Fahrzeug 7 beendet.

Es ist auch möglich, nicht nur eine Lichtschranke 25 vorzusehen, sondern in Verschieberichtung hintereinander zwei derartige Lichtschranken 25 und 25a. Die vordere Lichtschranke erzeugt ein Steuersignal, wenn die Verschiebebahn noch vom Rad eine gewissen Entfernung einhält, dadurch wird die Vorschubgeschwindigkeit der Tragvorrichtung herabgesetzt, so daß die Tragvorrichtung sich mit einer niedrigen Vorschubgeschwindigkeit dem Rad 14 nähert. Wenn die zweite Lichtschranke 25 das Rad erkennt, ist die Verschiebebahn ganz dicht an das Rad herangeschoben, entsprechend der Positionierung der Lichtschranke kann auch bereits eine Anlage erfolgen.

Während dieser Annäherung der Aufnahmevorrichtung 1 an das Fahrzeug 7 verschiebt die Steuerung 17 über den zugeordneten Antrieb den Schlitten 5 derart, daß die Mitnehmer 13 aus der Tragvorrichtung 2 ausgeschoben werden, wie dies in Figur 2 dargestellt ist. Dies führt dazu, daß die Drehgelenke 29, an denen die Arme 9 und 10 am Schlitten 5 gelagert sind, in Vorschubrichtung des Schlittens 5 hinter den Rädern 14 liegen, so daß bei dem nachfolgenden Verschwenken der Arm 9 und 10 in die Anlagestellung, also in die quer zur Längsrichtung der Verschiebebahnen 3 und 4 verlaufende Richtung, die Mitnehmer 13 hinter den Rädern 14 eingeschwenkt werden, wie dies in Figur 7 in ausgezogenen Linien dargestellt ist. Anschließend wird der Schlitten 5 von der Steuerung 17 wieder zurückgefahren bis die Anlagerollen 12 an dem Rad 14 anliegen. Die Anlagerollen 12, die gleichzeitig als Drucksensor 27 ausgebildet sind, geben daraufhin über die Signalleitung 28 ein Signal an die Steuerung 17, die daraufhin die Vorschubbewegung der Aufnahmevorrichtung 1 in Richtung auf das Rad 14 wieder einschaltet oder fortsetzt. Bei dieser Vorschubbewegung legt sich das Ende der Verschiebebahnen 3, 4 an die jeweiligen Räder 14 an.

Bei dieser Annäherung der Verschiebebahnen 3, 4 an die Räder 14 wird gleichzeitig der Schlitten 5 weiter in Richtung auf die Tragvorrichtung verschoben und zwar mit einer Geschwindigkeit, die gleich groß ist wie die Vorschubgeschwindigkeit der Tragvorrichtung 2, so daß die Mitnehmer 13 in der Anlage an den Rädern 14 verbleiben. Da die Mitnehmer 13 bei dieser Verschiebung auch ortsfest bleiben und nur die Verschiebebahnen 3, 4 sich von der Vorderseite her an die Räder 14 anlegen, wird auf die Räder keine Kraft in Fahrtrichtung des Fahrzeuges ausgeübt, selbst wenn die Räder also nicht blockiert sind, wird das Fahrzeug nicht verschoben.

Durch das vom Drucksensor 27 erzeugte Signal wird nicht nur die Zustellbewegung der Tragvorrichtung 2 an die Räder 14 eingeleitet, sondern gleichzeitig werden auch die Förderbänder der Verschiebebahnen 3, 4 in Gang gesetzt und zwar mit einer Geschwindigkeit, die der Vorschubgeschwindigkeit der Tragvorrichtung 2 entspricht, dieser aber entgegengesetzt ist. Dadurch bleibt das obere Trum des Förderbandes ortsfest stehen, auch wenn die Tragvorrichtung 2 in Richtung auf die Räder 14 bewegt wird.

Beim weiteren Vorschieben der Tragvorrichtung 2 in Richtung auf die Räder 14 gelangen die Enden der Verschiebebahnen 3, 4 in der Nähe der Standfläche der Räder 14 unter die Räder und heben die Räder 14 an. Dabei werden die Räder 14 durch die Mitnehmer 13 in ihrer ortsfesten Position gehalten, so daß das Fahrzeug dabei nicht weg rollen kann.

Bei einer Ausführungsform, bei der die Steuerung den Schlitten 5 mit derselben Geschwindigkeit gegen die Tragvorrichtung 2 verschiebt, mit der die Tragvorrichtung 2 selbst in Richtung auf die Räder 14 vorgeschoben wird, bleiben die Mitnehmer 13 ortsfest stehen, während die Verschiebebahnen 3, 4 unter die Räder einfahren. Dabei werden die Räder nicht gedreht, da die Kontaktfläche der Verschiebebahnen 3, 4, also das obere Trum des Förderbandes, ortsfest steht und sich ohne Relativbewegung an die Unterseite der Räder 14 anlegt.

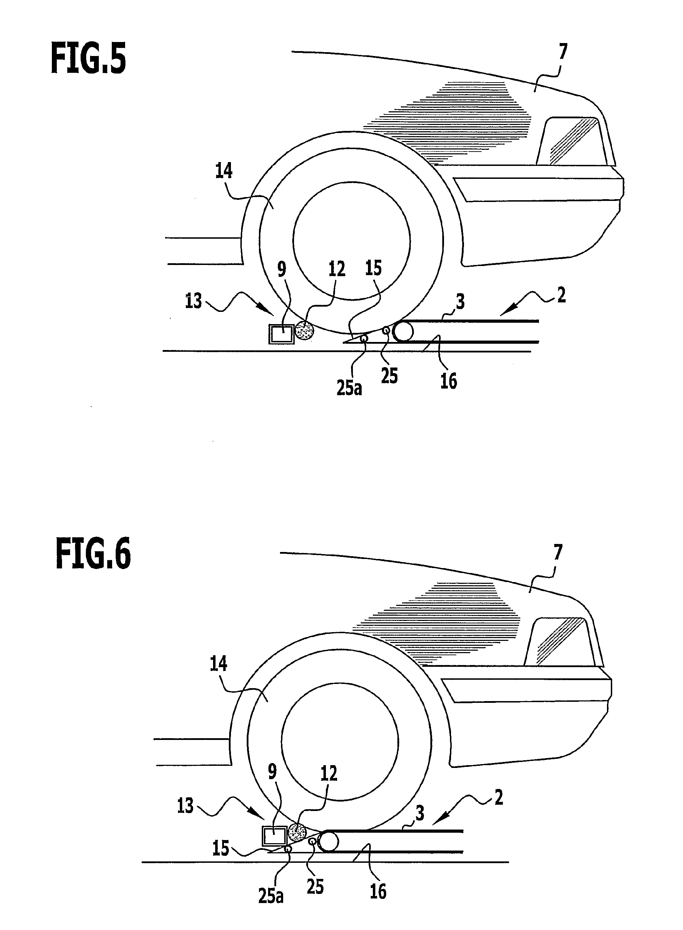

Im Bereich der Rampen 15 stützen sich die Anlagerollen 12 der Mitnehmer 13 an den Rampen 15 ab und werden dadurch angehoben, wenn der Schlitten 5 weiter in Richtung auf die Tragvorrichtung 2 verschoben wird (Figur 6). Dadurch wird das Aufsetzen des Rades auf die Verschiebebahn 3, 4 unterstützt, außerdem bildet der Mitnehmer 13 eine Sicherung des Rades gegen Abrollen.

Erfindungsgemäss ist es vorgesehen, daß der Rückbewegung des Schlittens 5 in Richtung auf die Tragvorrichtungen 2 eine zusätzliche Verschiebung überlagert wird, daß also mit anderen Worten der Schlitten 5 und damit die Mitnehmer 13 kurzfristig mit einer Geschwindigkeit gegen die Tragvorrichtung 2 verschoben werden, die größer ist als die Geschwindigkeit, mit der die Tragvorrichtung 2 gegen die Räder 14 verschoben werden. Vorzugsweise ist diese überlagerte Geschwindigkeit genau so groß wie die Vorschubgeschwindigkeit der Tragvorrichtungen 2 in Richtung auf die Räder 14, so daß die Rückzugsgeschwindigkeit des Schlittens 5 in Richtung auf die Tragvorrichtung doppelt so groß ist wie die Vorschubgeschwindigkeit der Tragvorrichtung 2 in Richtung auf die Räder 14. Diese Erhöhung der Rückzugsgeschwindigkeit des Schlittens beginnt vorzugsweise in dem Augenblick, in dem die Verschiebebahnen 3, 4 an den Rädern 14 zur Anlage gelangen, so daß während einer relativ kurzen Periode die Mitnehmer 13 von der einen Seite des Rades 14 und die Verschiebebahnen 3, 4 von der anderen Seite des Rades 14 in Richtung auf die Radmitte verschoben werden, und zwar mit gleicher, aber entgegengesetzter Geschwindigkeit relativ zu dem ortsfesten Rad. Die Anlagepunkte der Anlagerolle 12 einerseits und der Verschiebebahn 3 andererseits wandern dabei längs des Radumfangs in Richtung auf die tiefste Stellung, und dies führt zu einem Anheben des Rades 14. Die Erhöhung der Rückzugsgeschwindigkeit des Schlittens 5 wird abgebrochen, bevor die Anlagerolle 12 des Mitnehmers 13 diesen tiefsten Punkt des Rades 14 erreicht, ab diesem Zeitpunkt wird der Mitnehmer 13 wieder mit derselben Geschwindigkeit gegen die Tragvorrichtung 2 verschoben, mit der diese gegen das Rad 14 verschoben wird, so daß nach dieser kurzzeitigen Geschwindigkeitserhöhung der Mitnehmer 13 wieder ortsfest bleibt.

Sobald die Räder 14 auf den beiden Verschiebebahnen 3, 4 stehen, werden sie von den Förderbändern bei der weiteren Vorschubbewegung der Aufnahmevorrichtung 1 längs des Verschiebebahnen 3, 4 bewegt, so daß die Position der Räder 14 ortsfest bleibt. Horizontale Kräfte werden auf das Fahrzeug bei dieser Bewegung daher nicht ausgeübt, so daß eine Fixierung des Fahrzeuges durch die Mitnehmer 13 nicht mehr notwendig ist. Die Steuerung kann daher die Rückzugbewegung des Schlittens 5 einstellen und die Mitnehmer 13 wieder in die eingeklappte Ruhestellung verschwenken. Nach diesem Einschwenken der Mitnehmer wird der Schlitten 5 wieder aus der Tragvorrichtung 2 ausgefahren, so daß die Mitnehmer bei der weiteren Bewegung der Tragvorrichtung 2 in Richtung auf das Fahrzeug 7 zwischen den Hinterrädern des Fahrzeuges hindurchgreifen. An diesen Hinterrädern kann dann der vorstehend anhand der Vorderräder beschriebene Vorgang in gleicher Weise ablaufen, das heißt die Verschiebebahnen werden bis fast an die Hinterräder herangefahren, die Mitnehmer werden in die Anlagestellung ausgeschwenkt und an die Rückseite der Hinterräder herangefahren, die Vorschubbewegung der Tragvorrichtung 2 in Richtung auf die Hinterräder wird fortgesetzt, die Hinterräder werden angehoben und auf die Verschiebebahnen 3, 4 aufgesetzt.

Wenn das Fahrzeug mit allen Rädern auf den Verschiebebahnen 3, 4 steht, wird die Vorschubbewegung der Förderbänder abgeschaltet, so daß das Fahrzeug dann fest auf der Aufnahmevorrichtung 1 aufsteht, die Mitnehmer 13 bleiben dabei an den zuletzt aufgenommenen Rädern in der Anlage und wirken als Sicherungselement.

Zum Absetzen des Fahrzeugs wird in umgekehrter Richtung vorgegangen. Es ist dabei möglich, das Fahrzeug punktgenau auf die Tragfläche abzusetzen, also an einer gewünschten Position, die einmal durch die Verschiebung der Tragvorrichtung bestimmt wird und zum anderen durch die Entfernung des Rades vom Ende der Verschiebebahn beim Absenken des Rades.

Bei der in der Figur 1 dargestellten Aufnahmevorrichtung 1 befinden sich an beiden gegenüberliegenden Enden Schlitten 5 mit Mitnehmern 13, so daß der Aufnahmevorgang und der Absetzvorgang wahlweise nach gegenüberliegenden Seiten durchgeführt werden können. Eine solche Ausgestaltung ist jedoch nicht unbedingt notwendig. Grundsätzlich kann es schon reichen, wenn nur ein Mitnehmer für jede Aufnahmevorrichtung 1 vorgesehen ist. Der Mitnehmer muß auch nicht nacheinander Vorderrad und Hinterrad ergreifen, es würde genügen, wenn der Mitnehmer an dem zuerst aufgenommenen Rad anliegt und an diesem in der Anlage bleibt, denn auch dann wäre sichergestellt, daß sich das Fahrzeug auch dann nicht in Längsrichtung bewegt, wenn die Räder nicht blockiert sind.

Falls Verschiebebahnen verwendet werden, die nicht selbst angetrieben sind, sondern frei umlaufen, muß der Mitnehmer während der gesamten Vorschubbewegung der Tragvorrichtung 2 in entgegengesetzter Richtung längs der Verschiebebahnen bewegt werden und dadurch das Fahrzeug auf die Verschiebebahnen 3, 4 hinaufziehen, diese Anlage kann aber bei angetriebenen Verschiebebahnen 3, 4, die beispielsweise als umlaufende Förderbänder ausgebildet sind, unterbleiben.

## Patentansprüche

1. Aufnahmevorrichtung für ein mit Rädern auf einer Tragfläche stehendes Fahrzeug, mit einer in Fahrtrichtung des Fahrzeugs verschiebbaren Tragvorrichtung, mit mindestens einer parallel zur Fahrtrichtung des Fahrzeuges verlaufenden Verschiebebahn für die Räder des Fahrzeugs, die zumindest an einem Ende der Verschiebebahn nur so hoch über der Tragfläche angeordnet ist, dass sie unterhalb der Achse der Räder des Fahrzeugs liegt, und mit einem hinter ein Rad einschiebbaren, an der Rückseite des Rades anlegbaren Mitnehmer für das Rad, der an der Tragvorrichtung längs der Verschiebebahn verschiebbar gelagert ist, mit einem Antrieb zur Verschiebung der Tragvorrichtung in Fahrtrichtung des Fahrzeugs und mit einem Antrieb zur Verschiebung des Mitnehmers längs der Verschiebbebahn, **gekennzeichnet durch** eine Steuerung (17) für diese Antriebe, die zur Aufnahme eines Rades (14) auf einer Verschiebebahn (3, 4) sowohl den Mitnehmer (13) an der Rückseite des Rades (14) als auch das dem Rad (14) zugewandte Ende der Verschiebebahn (3, 4) an der Vorderseite des Rades (14) an dieses anlegt und nach dem Anlegen des Mitnehmers (13) und der Verschiebebahn (3, 4) an das Rad (14) die Tragvorrichtung (2) in Richtung auf das Rad (14) auf der Tragfläche (16) vorschiebt und dabei den Mitnehmer (13) in Richtung auf die Verschiebebahn (3, 4) relativ zu dieser mit derselben Geschwindigkeit vorschiebt, mit der sie die Tragvorrichtung (2) gegenüber der Tragfläche (16) verschiebt, mit Ausnahme einer kurzen Periode nach Anlage von Mitnehmer (13) und Verschiebebahn (3, 4) am Rad (14), in der die Steuerung (17) zum Anheben des Rades (14) kurzzeitig den Mitnehmer (13) in Richtung auf die Verschiebebahn (3, 4) relativ zu dieser mit einer Geschwindigkeit verschiebt, die höher ist als die Vorschubgeschwindigkeit der Tragvorrichtung (2) relativ zur Tragfläche (16), so dass während der kurzen Periode der Mitnehmer (13) von der einen Seite des Rades (14) und die Verschiebebahn (3, 4) von der anderen Seite des Rades (14) in Richtung auf die Radmitte verschoben werden.

2. Aufnahmevorrichtung nach Anspruch 1, **dadurch gekennzeichnet, dass** die Steuerung (17) den Mitnehmer (13) nach der Anlage von Mitnehmer (13) und Verschiebebahn (3, 4) am Rad (14) kurzzeitig mit einer Geschwindigkeit gegen die Verschiebebahn (3, 4) verschiebt, die im wesentlichen doppelt so groß ist wie die Vorschubgeschwindigkeit der Tragvorrichtung (2) relativ zur Tragfläche (16).

3. Aufnahmevorrichtung nach einem der Ansprüche 1 oder 2, **dadurch gekennzeichnet, dass** die Steuerung (17) die erhöhte Verschiebegeschwindigkeit des Mitnehmers (13) wieder auf eine Geschwindigkeit reduziert, die im wesentlichen gleich ist der Vorschubgeschwindigkeit der Tragvorrichtung (2), bevor der Mitnehmer (13) das Ende der Verschiebebahn (3, 4) erreicht.

4. Aufnahmevorrichtung nach einem der voranstehenden Ansprüche, **dadurch gekennzeichnet, dass** der Mitnehmer (13) mit einer Rolle (12) an das Rad (14) anlegbar ist, die um eine parallel zur Drehachse des Rades (14) verlaufende Achse frei drehbar ist.

5. Aufnahmevorrichtung nach einem der voranstehenden Ansprüche, **dadurch gekennzeichnet, dass** der Mitnehmer (13) unterhalb der halben Höhe des Rades (14) an diesem zur Anlage kommt.

6. Aufnahmevorrichtung nach einem der voranstehenden Ansprüche, **dadurch gekennzeichnet, dass** eine den Mitnehmer (13) vor dem Erreichen der Verschiebebahn (3, 4) anhebende Hubeinrichtung (15) vorgesehen ist.

7. Aufnahmevorrichtung nach Anspruch 6, **dadurch gekennzeichnet, dass** die Hubeinrichtung (15) eine den Mitnehmer (13) bei seiner Verschiebung gegen die Verschiebebahn (3, 4) anhebende Zwangsführung ist.

8. Aufnahmevorrichtung nach Anspruch 7, **dadurch gekennzeichnet, dass** die Zwangsführung mindestens eine in Richtung auf die Verschiebebahn (3, 4) keilförmige Stützfläche an der Tragvorrichtung (2) umfasst, auf der sich der Mitnehmer (13) abstützt.

9. Aufnahmevorrichtung nach einem der voranstehenden Ansprüche, **dadurch gekennzeichnet, dass** die Verschiebebahn (3, 4) gebildet wird durch ein Förderband.

10. Aufnahmevorrichtung nach einem der Ansprüche 1 bis 8, **dadurch gekennzeichnet, dass** die Verschiebebahn (3, 4) gebildet wird durch eine Rollenbahn.

11. Aufnahmevorrichtung nach einem der Ansprüche 9 oder 10, **dadurch gekennzeichnet, dass** die Verschiebebahn (3, 4) angetrieben ist und mit einer Geschwindigkeit umläuft, die der Vorschubgeschwindigkeit der Tragvorrichtung (2) gleich und entgegengesetzt ist.

12. Aufnahmevorrichtung nach einem der voranstehenden Ansprüche, **dadurch gekennzeichnet, dass** die Steuerung (17) zunächst die Tragvorrichtung (2) so weit gegen das Rad (14) vorschiebt, bis sich das Ende der Verschiebebahn (3, 4) kurz vor dem Rad (14) befindet, dann die Vorschubbewegung der Tragvorrichtung (2) reduziert oder abbricht, darauf den Mitnehmer (13) an die Rückseite des Rades (14) anlegt und danach die Vorschubbewegung der Tragvorrichtung (2) in Richtung auf das Rad (14) fortsetzt.

13. Aufnahmevorrichtung nach einem der voranstehenden Ansprüche, **dadurch gekennzeichnet, dass** an der Tragvorrichtung (2) ein Sensor (25) vorgesehen ist, der in Abhängigkeit vom Abstand des Endes der Verschiebebahn (3, 4) von dem Rad (14) Steuersignale an die Steuerung (17) sendet.

14. Aufnahmevorrichtung nach Anspruch 13, **dadurch gekennzeichnet, dass** der Sensor eine Lichtschranke umfasst.

15. Aufnahmevorrichtung nach einem der Ansprüche 13 oder 14, **dadurch gekennzeichnet, dass** der Sensor mehrere Sensorelemente (25, 25a) umfasst, die bei unterschiedlichem Abstand des Endes der Verschiebebahn (3, 4) von dem Rad (14) Steuersignale an die Steuerung (17) senden.

16. Aufnahmevorrichtung nach einem der voranstehenden Ansprüche, **dadurch gekennzeichnet, dass** am Mitnehmer (13) ein Sensor (27) vorgesehen ist, der in Abhängigkeit von der Anlage des Mitnehmers (13) am Rad (14) Steuersignale an die Steuerung (17) sendet.

17. Aufnahmevorrichtung nach Anspruch 16, **dadurch gekennzeichnet, dass** der Sensor (27) ein Tastelement ist.

18. Aufnahmevorrichtung nach einem der voranstehenden Ansprüche, **dadurch gekennzeichnet, dass** nebeneinander zwei Mitnehmer (13) an der Tragvorrichtung (2) vorgesehen sind, die jeweils an einem von zwei nebeneinanderliegenden Rädern (14) eines Fahrzeugs (7) anlegbar sind.

19. Aufnahmevorrichtung nach einem der voranstehenden Ansprüche, **dadurch gekennzeichnet, dass** der Mitnehmer (13) einen aus einer im Wesentlichen parallel zur Fahrtrichtung des Fahrzeugs (7) verlaufenden Ruhestellung in eine quer dazu stehende Anlagestellung verschwenkbaren Arm (9, 10) umfasst.

20. Aufnahmevorrichtung nach einem der voranstehenden Ansprüche, **dadurch gekennzeichnet, dass** zwei Mitnehmer (13) an einem zwischen zwei parallelen Verschiebebahn (3, 4) angeordneten, parallel zu den Verschiebebahnen (3, 4) verschiebbaren Schlitten (5) gelagert sind.

21. Aufnahmevorrichtung nach einem der voranstehenden Ansprüche, **dadurch gekennzeichnet, dass** gegenüberliegenden Enden der Verschiebebahn (3, 4) je ein Mitnehmer (13) zugeordnet ist.

22. Aufnahmevorrichtung nach einem der Ansprüche 1 bis 20, **dadurch gekennzeichnet, dass** zwei im Wesentlichen gleich aufgebaute Tragvorrichtungen (2) mit ihren den Mitnehmer (13) abgewandten Enden aneinanderliegend zusammengekuppelt sind.

23. Aufnahmevorrichtung nach Anspruch 22, **dadurch gekennzeichnet, dass** die beiden Tragvorrichtungen (2) selbständig verfahrbar und um eine quer zur Verschieberichtung verlaufende, horizontale Schwenkachse gegeneinander verschwenkbar sind.

24. Aufnahmevorrichtung nach einem der voranstehenden Ansprüche, **dadurch gekennzeichnet, dass** die Steuerung (17) nach dem Aufsetzen eines Rades (14) auf die Verschiebebahn (3, 4) den Mitnehmer (13) von dem Rad (14) entfernt und so weit in Verschieberichtung der Tragvorrichtung (2) verschiebt, dass der Mitnehmer (13) das in Fahrtrichtung des Fahrzeuges (7) nächste Rad (14) desselben hintergreifen und dann an dessen Rückseite zur Anlage gebracht werden kann.

25. Aufnahmevorrichtung nach einem der Ansprüche 1 bis 23, **dadurch gekennzeichnet, dass** die Steuerung (17) den Mitnehmer (13) an einem Rad (14) anliegend längs der Verschiebebahn (3, 4) verschiebt, bis das Fahrzeug (7) vollständig auf der Tragvorrichtung (2) steht.

26. Aufnahmevorrichtung nach einem der voranstehenden Ansprüche, **dadurch gekennzeichnet, dass** zwei Verschiebebahnen (3, 4) parallel zueinander verlaufend nebeneinander angeordnet sind, die in Verschieberichtung gegeneinander versetzt sind.

## Claims

1. Receiving apparatus for a vehicle standing with wheels on a support surface, said receiving apparatus comprising a support apparatus displaceable in a direction of travel of the vehicle, at least one displacement track for the wheels of the vehicle, said displacement track extending parallel to the direction of travel of the vehicle and being arranged only so high above the support surface as to be below the axis of the wheels of the vehicle at least at one end of the displacement track, and a driver for the wheel which is slidable in behind a wheel and is abuttable with the rear of the wheel and is mounted on the support apparatus for displacement along the displacement track, and a drive for displacing the support apparatus in a direction of travel of the vehicle, and a drive for displacing the driver along the displacement track, **characterized by** a controller (17) for said drives which, for receiving a wheel (14) on a displacement track (3, 4), brings both the driver (13) at the rear side of the wheel (14) and the end of the displacement track (3, 4) facing towards the wheel (14) at the front side of the wheel (14) into abutment with the wheel (14) and, after bringing the driver (13) and the displacement track (3, 4) into abutment with the wheel (14), advances the support apparatus (2) on the support surface (16) in a direction towards the wheel (14) while advancing the driver (13) in a direction towards the displacement track (3, 4) relative to the displacement track (3, 4) at the same velocity as it displaces the support apparatus (2) relative to the support surface (16), except for a short period after abutment of the driver (13) and the displacement track (3, 4) with the wheel (14) during which the controller (17), for raising the wheel (14), displaces the driver (13) in a direction towards and relative to the displacement track (3, 4) at a velocity that is higher than the advance velocity of the support apparatus (2) relative to the support surface (16) for a short period of time so that during said short period the driver (13), from the one side of the wheel (14), and the displacement track (3, 4), from the other side of the wheel (14), are displaced in a direction towards the wheel centre.

2. Receiving apparatus in accordance with claim 1, **characterized in that** after the abutment of the driver (13) and the displacement track (3, 4) with the wheel (14), the controller (17) displaces the driver (13) towards the displacement track (3, 4) at a velocity that is essentially twice the size of the advance velocity of the support apparatus (2) relative to the support surface (16) for a short period of time.

3. Receiving apparatus in accordance with claim 1 or 2, **characterized in that** prior to the driver (13) reaching the end of the displacement track (3, 4), the controller (17) again reduces the increased displacement velocity of the driver (13) to a velocity that is essentially the same as the advance velocity of the support apparatus (2).

4. Receiving apparatus in accordance with any one of the preceding claims, **characterized in that** the driver (13) is abuttable with the wheel (14) through a roller (12) that is free to rotate about an axis running parallel to the axis of rotation of the wheel (14).

5. Receiving apparatus in accordance with any one of the preceding claims, **characterized in that** the driver (13) comes into abutment with the wheel (14) at a level that is below half the height of the wheel (14).

6. Receiving apparatus in accordance with any one of the preceding claims, **characterized in that** a lifting device (15) is provided which lifts the driver (13) before reaching the displacement track (3, 4).

7. Receiving apparatus in accordance with claim 6, **characterized in that** the lifting device (15) is a compulsory guide which lifts the driver (13) when the latter is displaced towards the displacement track (3, 4).

8. Receiving apparatus in accordance with claim 7, **characterized in that** the compulsory guide comprises at least one supporting surface at the support apparatus (2) which is wedge-shaped in a direction towards the displacement track (3, 4) and against which the driver (13) is supported.

9. Receiving apparatus in accordance with any one of the preceding claims, **characterized in that** the displacement track (3, 4) is formed by a conveyor belt.

10. Receiving apparatus in accordance with any one of claims 1 to 8, **characterized in that** the displacement track (3, 4) is formed by a roller track.

11. Receiving apparatus in accordance with claim 9 or 10, **characterized in that** the displacement track (3, 4) is power-driven and rotates at a velocity that is the same as and opposite to the advance velocity of the support apparatus (12).

12. Receiving apparatus in accordance with any one of the preceding claims, **characterized in that** the controller (17) at first advances the support apparatus (2) far enough towards the wheel (14) until the end of the displacement track (3, 4) is just before the wheel (14), then reduces or discontinues the advance movement of the support apparatus (2), then abuts the driver (13) with the rear of the wheel (14) and then continues the advance movement of the support apparatus (2) in a direction towards the wheel (14).

13. Receiving apparatus in accordance with any one of the preceding claims, **characterized in that** the support apparatus (2) is provided with a sensor (25) which sends control signals to the controller (17) depending on the distance of the end of the displacement track (3, 4) from the wheel (14).

14. Receiving apparatus in accordance with claim 13, **characterized in that** the sensor comprises a light barrier.

15. Receiving apparatus in accordance with claim 13 or 14, **characterized in that** the sensor comprises a plurality of sensor elements (25, 25a) which send control signals to the controller (17) when the end of the displacement track (3, 4) is at different distances from the wheel (14).

16. Receiving apparatus in accordance with any one of the preceding claims, **characterized in that** the driver (13) is provided with a sensor (27) which sends control signals to the controller (17) depending on the abutment of the driver (13) with the wheel (14).

17. Receiving apparatus in accordance with claim 16, **characterized in that** the sensor (27) is a contact element.

18. Receiving apparatus in accordance with any one of the preceding claims, **characterized in that** the support apparatus (2) is provided with two drivers (13) arranged side by side, each of them abuttable with one of two side-by-side wheels (14) of a vehicle (7).

19. Receiving apparatus in accordance with any one of the preceding claims, **characterized in that** the driver (13) comprises an arm (9, 10) that is pivotable from a rest position substantially parallel to the direction of travel of the vehicle (7) into an abutting position transverse thereto.

20. Receiving apparatus in accordance with any one of the preceding claims, **characterized in that** two drivers (13) are supported on a slider (5) arranged between two parallel displacement tracks (3, 4) and displaceable parallel to the displacement tracks (3, 4).

21. Receiving apparatus in accordance with any one of the preceding claims, **characterized in that** opposing ends of the displacement track (3, 4) in each case have a driver (13) associated therewith.

22. Receiving apparatus in accordance with any one of claims 1 to 20, **characterized in that** two support apparatuses (2) of essentially identical construction are coupled together with their ends facing away from the drivers (13) in end-to-end relationship.

23. Receiving apparatus in accordance with claim 22, **characterized in that** the two support apparatuses (2) are independently movable and pivotable relative to each other about a horizontal pivot axis running transverse to the direction of displacement.

24. Receiving apparatus in accordance with any one of the preceding claims, **characterized in that** after a wheel (14) has been set on the displacement track (3, 4), the controller (17) removes the driver (13) from said wheel (14) and displaces it far enough in a direction of displacement of the support apparatus (2) so that the driver (13) can engage behind the wheel (14) of the vehicle (7) that follows next in the direction of travel of the vehicle (7) and can then be brought into abutment with the rear of said wheel (14).

25. Receiving apparatus in accordance with any one of claims 1 to 23, **characterized in that** the controller (17) displaces the driver (13) in abutting relation with a wheel (14) along the displacement track (3, 4) until the vehicle (7) fully stands on the support apparatus (2).

26. Receiving apparatus in accordance with any one of the preceding claims, **characterized in that** two displacement tracks (3, 4) are arranged side by side in parallel relationship to each other, said displacement tracks (3, 4) being offset relative to each other in a direction of displacement.

## Revendications

1. Dispositif d'accueil pour un véhicule reposant sur une surface de support par l'intermédiaire de roues, comprenant un dispositif porteur pouvant coulisser dans la direction de marche du véhicule,
comprenant au moins une voie de coulissement pour les roues du véhicule, qui s'étend parallèlement à la direction de marche du véhicule, et qui, tout au moins à une extrémité de la voie de coulissement, n'est agencée au-dessus de la surface de support qu'à une hauteur telle, qu'elle se situe sous l'axe des roues du véhicule,
et comprenant un entraîneur pour la roue, qui peut être glissé derrière une roue et appliqué contre le côté arrière de la roue, et qui est monté sur le dispositif porteur de manière à pouvoir coulisser le long de la voie de coulissement,
comprenant un entraînement pour faire coulisser le dispositif porteur dans la direction de marche du véhicule,
et comprenant un entraînement pour le coulissement de l'entraîneur le long de la voie de coulissement, **caractérisé par** une commande (17) pour ces entraînements, qui, pour l'accueil d'une roue (14) sur une voie de coulissement (3, 4), applique aussi bien l'entraîneur (13) contre le côté arrière de la roue (14), que l'extrémité de la voie de coulissement (3, 4), dirigée vers la roue (14), contre le côté avant de la roue (14), et, après l'application de l'entraîneur (13) et de la voie de coulissement (3, 4) contre la roue (14), fait avancer par coulissement le dispositif porteur (2) en direction de la roue (14) sur la surface de support (16) tout en faisant avancer à cette occasion l'entraîneur (13) en direction de la voie de coulissement (3, 4) par rapport à celle-ci, avec la même vitesse avec laquelle elle fait coulisser le dispositif porteur (2) par rapport à la surface de support (16), exception faite d'une courte période après la venue en appui de l'entraîneur (13) et de la voie de coulissement (3, 4) contre la roue (14), au cours de laquelle la commande (17), pour soulever la roue (14), fait coulisser brièvement l'entraîneur (13) en direction de la voie de coulissement (3, 4) relativement par rapport à celle-ci, avec une vitesse qui est supérieure à la vitesse d'avance du dispositif porteur (2) par rapport à la surface de support (16), de sorte que pendant ladite courte période, l'entraîneur (13) est déplacé à partir d'un côté de la roue (14) et la voie de coulissement (3, 4) à partir de l'autre côté de la roue (14), en direction du milieu de la roue.

2. Dispositif d'accueil selon la revendication 1, **caractérisé en ce que** la commande (17) fait coulisser l'entraîneur (13), après la venue en appui de l'entraîneur (13) et de la voie de coulissement (3, 4) contre la roue (14), brièvement à l'encontre de la voie de coulissement (3, 4), avec une vitesse qui est sensiblement égale au double de la vitesse d'avance du dispositif porteur (2) par rapport à la surface de support (16).

3. Dispositif d'accueil selon l'une des revendications 1 ou 2, **caractérisé en ce que** la commande (17) réduit à nouveau la vitesse de coulissement augmentée de l'entraîneur (13), à une vitesse qui est sensiblement égale à la vitesse d'avance du dispositif porteur (2), avant que l'entraîneur (13) atteigne l'extrémité de la voie de coulissement (3, 4).

4. Dispositif d'accueil selon l'une des revendications précédentes, **caractérisé en ce que** l'entraîneur (13) peut être appliqué contre la roue (14) avec un rouleau (12), qui est librement rotatif autour d'un axe s'étendant parallèlement à l'axe de rotation de la roue (14).

5. Dispositif d'accueil selon l'une des revendications précédentes, **caractérisé en ce que** l'entraîneur (13) vient s'appliquer contre la roue (14) en-dessous de la moitié de la hauteur de celle-ci.

6. Dispositif d'accueil selon l'une des revendications précédentes, **caractérisé en ce qu'**il est prévu un dispositif de soulèvement (15) soulevant l'entraîneur (13) avant d'atteindre la voie de coulissement (3, 4).

7. Dispositif d'accueil selon la revendication 6, **caractérisé en ce que** le dispositif de soulèvement (15) est un guidage forcé soulevant l'entraîneur (13) lors de son coulissement à l'encontre de la voie de coulissement (3, 4).

8. Dispositif d'accueil selon la revendication 7, **caractérisé en ce que** le guidage forcé comprend au moins sur le dispositif porteur (2), une surface d'appui en forme de rampe en coin en direction de la voie de coulissement (3, 4), sur laquelle s'appuie l'entraîneur (13).

9. Dispositif d'accueil selon l'une des revendications précédentes, **caractérisé en ce que** la voie de coulissement (3, 4) est formée par une bande de transport.

10. Dispositif d'accueil selon l'une des revendications 1 à 8, **caractérisé en ce que** la voie de coulissement (3, 4) est formée par une voie à rouleaux.

11. Dispositif d'accueil selon l'une des revendications 9 ou 10, **caractérisé en ce que** la voie de coulissement (3, 4) est entraînée et est en révolution avec une vitesse, qui est égale et opposée à la vitesse d'avance du dispositif porteur (2).

12. Dispositif d'accueil selon l'une des revendications précédentes, **caractérisé en ce que** la commande (17) fait tout d'abord avancer le dispositif porteur (2) vers la roue (14) jusqu'à ce que l'extrémité de la voie de coulissement (3, 4) se trouve juste devant la roue (14), puis réduit ou interrompt le mouvement d'avance du dispositif porteur (2), applique ensuite l'entraîneur (13) contre le côté arrière de la roue (14), et poursuit alors le mouvement d'avance du dispositif porteur (2) en direction de la roue (14).

13. Dispositif d'accueil selon l'une des revendications précédentes, **caractérisé en ce que** sur le dispositif porteur (2) est prévu un capteur (25), qui envoie à la commande (17), des signaux de commande en fonction de la distance de l'extrémité de la voie de coulissement (3, 4) à la roue (14).

14. Dispositif d'accueil selon la revendication 13, **caractérisé en ce que** le capteur comprend une barrière photoélectrique.

15. Dispositif d'accueil selon l'une des revendications 13 ou 14, **caractérisé en ce que** le capteur comprend plusieurs éléments de capteur (25, 25a), qui envoient des signaux de commande à la commande (17) pour une distance différente de l'extrémité de la voie de coulissement (3, 4) à la roue (14).

16. Dispositif d'accueil selon l'une des revendications précédentes, **caractérisé en ce que** sur l'entraîneur (13) est prévu un capteur (27), qui envoie des signaux de commande à la commande (17), en fonction de l'appui de l'entraîneur (13) contre la roue (14).

17. Dispositif d'accueil selon la revendication 16, **caractérisé en ce que** le capteur (27) est un élément palpeur.

18. Dispositif d'accueil selon l'une des revendications précédentes, **caractérisé en ce que** sur le dispositif porteur (2) sont prévus côte à côte, deux entraîneurs (13), qui peuvent être appliqués respectivement contre l'une de deux roues (14) d'un véhicule (7), qui sont placées côte à côte.

19. Dispositif d'accueil selon l'une des revendications précédentes, **caractérisé en ce que** l'entraîneur (13) comprend un bras (9, 10) pouvant pivoter à partir d'une position de repos s'étendant sensiblement de manière parallèle à la direction de marche du véhicule (7), vers une position d'application, transversale à la précédente.

20. Dispositif d'accueil selon l'une des revendications précédentes, **caractérisé en ce que** deux entraîneurs (13) sont montés sur un chariot (5), qui est agencé entre deux voies de coulissement (3, 4) parallèles, et peut coulisser parallèlement aux voies de coulissement (3, 4).

21. Dispositif d'accueil selon l'une des revendications précédentes, **caractérisé en ce qu'**à des extrémités mutuellement opposées de la voie de coulissement (3, 4), est associé respectivement un entraîneur (13).

22. Dispositif d'accueil selon l'une des revendications 1 à 20, **caractérisé en ce que** deux dispositifs porteurs (2) de construction sensiblement identique sont couplés l'un à l'autre avec leurs extrémités opposées à celles où se trouvent les entraîneurs (13).

23. Dispositif d'accueil selon la revendication 22, **caractérisé en ce que** les deux dispositifs porteurs (2) peuvent être déplacés de manière indépendante et peuvent pivoter l'un par rapport à l'autre autour d'un axe de pivotement horizontal, qui s'étend transversalement à la direction de coulissement.

24. Dispositif d'accueil selon l'une des revendications précédentes, **caractérisé en ce que** la commande (17), après la pose d'une roue (14) sur la voie de coulissement (3, 4), éloigne l'entraîneur (13) de la roue (14) et le fait coulisser dans la direction de coulissement du dispositif porteur (2) jusqu'à ce que l'entraîneur (13) puisse s'engager derrière la roue (14) suivante du véhicule (7) en se référant à la direction de marche de celui-ci, et puisse alors être appliqué contre le côté arrière de cette roue suivante.

25. Dispositif d'accueil selon l'une des revendications 1 à 23, **caractérisé en ce que** la commande (17) fait coulisser l'entraîneur (13) appliqué contre une roue (14), le long de la voie de coulissement (3, 4), jusqu'à ce que le véhicule (7) repose en totalité sur le dispositif porteur (2).

26. Dispositif d'accueil selon l'une des revendications précédentes, **caractérisé en ce que** deux voies de coulissement (3, 4) sont agencées côte à côte en s'étendant parallèlement 1"une à l'autre, et sont décalées l'une par rapport à l'autre dans la direction de coulissement.
